# EUROPEAN PATENT APPLICATION

(11) **EP 3 835 567 A1**
(43) Date of publication of application: **16.06.2021**
(21) Application number: 20211144.9
(22) Date of filing: 02.12.2020
(51) Int. Cl.: F02D 41/00, F02D 41/14, F02D 19/02, F02D 35/02

(54) **METHOD OF CONTROLLING EGR, CONTROL ARRANGEMENT, INTERNAL COMBUSTION ENGINE, VEHICLE, COMPUTER PROGRAM, AND COMPUTER-READABLE MEDIUM**

(30) Priority: 11.12.2019 SE 1951425
(71) Applicant: Scania CV AB, 151 87 Södertälje (SE)
(72) Inventor: FORSLUND, Anders, 647 31 Mariefred (SE); JENSEN, Mathias, 153 35 Järna (SE)
(74) Representative: Scania CV AB

(57) **Abstract**

A method (100) of controlling an amount of recirculated exhaust gas (Egr) to a cylinder (3) of an internal combustion engine (1) is disclosed. The method (100) comprises the steps of increasing (110) the amount of recirculated exhaust gas (Egr) if a current exhaust temperature (Tex) of the engine (1) is above a first threshold temperature (T1), and reducing (120) the amount of recirculated exhaust gas (Egr) if a combustion stability parameter (Sp) of the engine (1) drops below a first stability threshold value (S1). The present disclosure further relates to a computer program, a computer-readable medium (200), a control arrangement (5), an internal combustion engine (1), and a vehicle (40).

## Description

### TECHNICAL FIELD

The present disclosure relates to a method of controlling an amount of recirculated exhaust gas to a cylinder of an internal combustion engine. The present disclosure further relates to a computer program, a computer-readable medium, a control arrangement, an internal combustion engine, and a vehicle comprising an internal combustion engine.

### BACKGROUND

Internal combustion engines, such as four-stroke internal combustion engines, comprise one or more cylinders and a piston arranged in each cylinder. The pistons are connected to a crankshaft of the engine and are arranged to reciprocate within the cylinders upon rotation of the crankshaft. The engine usually further comprises one or more inlet valves and outlet valves as well as one or more fuel supply arrangements. The one or more inlet valves and outlet valves are controlled by a respective valve control arrangement usually comprising one or more camshafts rotatably connected to a crankshaft of the engine, via a belt, chain, gears, or similar. A four-stroke internal combustion engine completes four separate strokes while turning a crankshaft. A stroke refers to the full travel of the piston along the cylinder, in either direction. The uppermost position of the piston in the cylinder is usually referred to as the top dead centre TDC, and the lowermost position of the piston in the cylinder is usually referred to as the bottom dead centre BDC.

The strokes are completed in the following order, inlet stroke, compression stroke, expansion stroke and exhaust stroke. During operation of a conventional four-stroke internal combustion engine, the inlet valve control arrangement controls inlet valves of a cylinder to an open state during the inlet stroke of a piston within the cylinder, to allow air, or a mixture of air and fuel, to enter the cylinder. During the compression stroke, all valves should be closed to allow compression of the air, or the mixture of the air and fuel, in the cylinder. If the engine is in a power producing state, fuel in the cylinder is ignited, usually towards the end of the compression stroke, for example by a spark plug or by compression heat in the cylinder. The combustion of fuel within the cylinder significantly increases pressure and temperature in the cylinder. The combustion of the fuel usually continues into a significant portion of the subsequent expansion stroke. The increased pressure and temperature in the cylinder obtained by the combustion is partially converted into mechanical work supplied to the crank shaft during the expansion stroke. Obviously, all valves should remain closed during the expansion stroke to allow the increased pressure and temperature to be converted into mechanical work. The expansion stroke is also usually referred to as the combustion stroke, since usually, the majority of the combustion takes place during the expansion stroke. In the subsequent exhaust stroke, the exhaust valve control arrangement controls exhaust valves of the cylinder to an open state to allow exhaust gases to be expelled out of the cylinder into an exhaust system.

Combustion engines can be divided into the category's compression ignition engines and Otto-engines. In a compression ignition engine, such as a diesel engine or an HCCI-engine, an air-fuel mixture in the cylinder is ignited by the compression heat generated during the compression stroke of the engine. Some compression ignition engines comprise a glow-plug used mainly during start-up of the engine to promote and/or initiate combustion. Otto-engines operate in the so called Otto-cycle and comprise an ignition device, such as a spark plug, arranged to ignite the air-fuel mixture in the cylinder, usually towards the end of the compression stroke.

Environmental concerns have led to the development of various types of alternative fuels and fuel mixtures for combustion engines. These fuels include so called bio-fuels which are considered as renewable sources of energy since they can be produced using biomass. Bio-fuels comprise liquid fuels, such as alcohol fuels and bio-diesel, and gaseous fuels, such as biogas.

Bio-diesel can be made from animal fats or vegetable oils. Biogas is a mixture of gases produced by the breakdown of organic matter in the absence of oxygen and usually comprises methane and other constituents. Biogas can be produced from biological raw materials such as agricultural waste, manure, municipal waste, plant material, sewage, green waste, and food waste.

A problem associated with combustion engines being configured to operate on alternative fuels is that the current fuel or fuel mixture supplied to the engine is usually unknown. As an example, internal combustion engines configured to run on a gaseous fuel, such as bio-gas, can also run on natural gas. Natural gas, also known as fossil gas, is a naturally occurring hydrocarbon gas mixture consisting primarily of methane. Natural gas is not a renewable source of energy. However, internal combustion engines configured to run on a gaseous fuel are sometimes operated on natural gas, for example due to lack of availability of bio-gas.

Natural gas has a different fuel burning characteristics than bio-gas. For example, misfires are more likely to occur when using bio-gas than when using natural gas. Moreover, the octane rating, also referred to as octane number, differs significantly between bio-gas and natural gas and between different mixtures thereof.

Likewise, the octane rating of liquid fuels such as diesel, bio-diesel, petrol, alcohol, similar volatile fuels, or combinations thereof differs significantly. In addition, these types of fuels have different fuel burning characteristics and different misfire probabilities when used in an engine.

Another problem associated with internal combustion engines is exhaust temperature. The exhaust temperature increases with increased engine output and increased ambient temperatures. Some components of an exhaust system of an engine, such as exhaust manifolds, turbines of a turbocharger, housings of a turbocharger, different exhaust after treatment components, and the like, are sensitive to too high exhaust temperatures. Therefore, the output of the engine is usually limited when the exhaust temperature reaches a predetermined temperature so as to supress the exhaust temperature and protect such components from damage.

However, the limitation of the output of the engine is usually perceived negatively by users, such as a driver of a vehicle comprising such an engine. Moreover, as is indicated above, the development of alternative fuels adds to the problem because it is more difficult to predict when the output of the engine will be limited or not.

### SUMMARY

It is an object of the present invention to overcome, or at least alleviate, at least some of the above-mentioned problems and drawbacks.

According to a first aspect of the invention, the object is achieved by a method of controlling an amount of recirculated exhaust gas to a cylinder of an internal combustion engine, wherein the method comprises the steps of:
- increasing the amount of recirculated exhaust gas if a current exhaust temperature of the engine is above a first threshold temperature, and
- reducing the amount of recirculated exhaust gas if a combustion stability parameter of the engine drops below a first stability threshold value.

Thereby, a method is provided capable of adapting the amount of the recirculated exhaust gas to the cylinder based on a current operational condition of the engine and on a current composition of fuel supplied to the engine. As a result thereof, a method is provided capable of increasing the possible power output of the engine while keeping the exhaust temperature below threshold limits in an adaptive manner based on a current operational condition of the engine and based on a current composition of fuel supplied to the engine.

A higher amount of recirculated exhaust gas to the cylinder reduces the exhaust temperature but increases the possibility of misfires in the engine. Accordingly, by increasing the amount of recirculated exhaust gas if the current exhaust temperature of the engine is above the first threshold temperature, the exhaust temperature will be reduced, or at least limited. Moreover, misfires will be avoided, or at least limited, by reducing the amount of recirculated exhaust gas if the combustion stability parameter of the engine drops below a first stability threshold value.

Accordingly, the method allows for an increase of recirculated exhaust gas to levels just below levels which impair the combustion process in the cylinder. In this manner, the amount of recirculated exhaust gas is controlled in an adaptive manner based on the properties of the current fuel being supplied to the engine to levels tolerated by the current fuel, which provides conditions for an increased power output of the engine while keeping the exhaust temperature below threshold limits, even at high ambient temperatures.

As a further result thereof, a method is provided reducing the need for limiting the output of the engine to avoid too high exhaust temperatures, even at high ambient temperatures.

As an example of the adaptive nature of the method according to the first aspect of the invention, if the engine is configured to run on a gaseous fuel, and the current gaseous fuel is mainly composed of natural gas, the amount of recirculated exhaust gas can be increased to higher levels without impairing the combustion process in the cylinder than when using bio-gas. This because natural gas can withstand more recirculated exhaust gas than bio-gas before instabilities in the combustion process arises. Accordingly, when the current gaseous fuel is mainly composed of bio-gas, the combustion stability parameter of the engine is expected to drop below the first stability threshold value at a lower level of recirculated exhaust gas than when the current gaseous fuel is mainly composed of natural gas. In this manner, the method according to the first aspect of the invention may control the amount of recirculated exhaust gas in an adaptive manner based on the current composition of fuel supplied to the engine and on a current operational condition of the engine to levels just below levels which impair the combustion process in the cylinder. In this manner, the output of the engine can be increased without obtaining too high exhaust temperatures, given the current type of fuel supplied to the engine and given ambient conditions, such as the ambient temperature.

If the engine is a compression ignition engine comprising a Selective Catalytic Reduction (SCR) catalyst, the method provides conditions for avoiding supply of exhaust having too high temperatures to the SCR-catalyst in an adaptive manner based on the current composition of fuel supplied to the engine and on a current operational condition of the engine. This because the method allows for an increase of recirculated exhaust gas to levels just below levels which impair the combustion process in the cylinder. Accordingly, the method allows for increased power output of the engine while keeping the exhaust temperature below threshold limits set by the SCR-catalyst.

Accordingly, a method is provided overcoming, or at least alleviating, at least some of the above-mentioned problems and drawbacks. As a result, the above-mentioned object is achieved

Optionally, the step of increasing the amount of recirculated exhaust gas comprises the step of:
- increasing the amount of recirculated exhaust gas in a gradual or stepwise manner until the combustion stability parameter of the engine drops below a second stability threshold value, wherein the second stability threshold value is higher than, or equal to, the first stability threshold value.

Thereby, a method is provided capable of regulating the amount of recirculated exhaust gas in a further adaptive manner based on the current composition of fuel supplied to the engine and on the current operational condition of the engine.

Optionally, the method further comprises:
- reducing the amount of recirculated exhaust gas if the current exhaust temperature of the engine drops below the first threshold temperature.

Thereby, a method is provided capable of regulating the amount of recirculated exhaust gas in a further adaptive manner based on the current composition of fuel supplied to the engine and on the current operational condition of the engine. This because the amount of recirculated exhaust gas is reduced if the current exhaust temperature of the engine indicates that no higher amount of recirculated exhaust gas is needed for supressing the exhaust temperature.

Optionally, the method further comprises:
- limiting the output of the engine if the current exhaust temperature rises above a second threshold temperature, wherein the second threshold temperature is equal to, or higher than, the first threshold temperature.

Thereby, a further adaptive method is provided capable of avoiding too high exhaust temperatures in an improved manner based on the current composition of fuel supplied to the engine and on the current operational condition of the engine. In addition, since the method according to the present disclosure reduces the need for limiting the output of the engine, the limiting of the output of the engine can be seen as a further safety measure taken to further avoid too high exhaust temperatures, for example caused by high ambient temperatures, and/or a disadvantageous fuel composition supplied to the engine.

Optionally, the method comprises:
- inputting the combustion stability parameter by monitoring a rotational speed of a crank shaft of the engine.

That is, according to some embodiments of the present disclosure, the combustion stability parameter comprises a rotational speed of a crank shaft of the engine.

Thereby, a reliable combustion stability parameter can be obtained capable of indicating instabilities in the combustion in the cylinder before full misfires in the cylinder arises. In this manner, an improved control of the amount of recirculated exhaust gas can be performed.

Optionally, the method comprises:
- inputting the combustion stability parameter by monitoring the presence of ion currents in the cylinder.

That is, according to some embodiments of the present disclosure, the combustion stability parameter comprises a parameter representing a presence of ion currents in the cylinder.

Thereby, a reliable combustion stability parameter can be obtained capable of indicating instabilities in the combustion in the cylinder before full misfires in the cylinder arises. In this manner, an improved control of the amount of recirculated exhaust gas can be performed.

Moreover, by combining the rotational speed of the crank shaft and the presence of ion currents in the cylinder, a further reliable combustion stability parameter can be obtained having conditions for indicating instabilities in the combustion in the cylinder with a high accuracy before full misfires arises in the cylinder. In this manner, a further improved control of the amount of recirculated exhaust gas can be performed.

Optionally, the internal combustion engine is an Otto engine comprising an ignition device configured to ignite an air fuel mixture in the cylinder.

Thereby, the method provides conditions for an increased power output of the Otto engine while keeping the exhaust temperature below threshold limits, even at high ambient temperatures

Optionally, the internal combustion engine is configured to run on a gaseous fuel.

Thereby, a method is provided in which the amount of recirculated exhaust gas is controlled in an adaptive manner based on the properties of the current gaseous fuel being supplied to the engine to levels tolerated by the current gaseous fuel, which provides conditions for an increased power output of the engine while keeping the exhaust temperature below threshold limits.

According to a second aspect of the invention, the object is achieved by a computer program comprising instructions which, when the program is executed by a computer, cause the computer to carry out the method according to some embodiments of the present disclosure. Since the computer program comprises instructions which, when the program is executed by a computer, cause the computer to carry out the method according to some embodiments, a computer program is provided which provides conditions for overcoming, or at least alleviating, at least some of the above-mentioned drawbacks.

According to a third aspect of the invention, the object is achieved by a computer-readable medium comprising instructions which, when executed by a computer, cause the computer to carry out the method according to some embodiments of the present disclosure. Since the computer-readable medium comprises instructions which, when the program is executed by a computer, cause the computer to carry out the method according to some embodiments, a computer-readable medium is provided which provides conditions for overcoming, or at least alleviating, at least some of the above-mentioned drawbacks

According to a fourth aspect of the invention, the object is achieved by a control arrangement configured to control an amount of recirculated exhaust gas to a cylinder of an internal combustion engine, wherein the control arrangement is configured to:
- increase of the amount of recirculated exhaust gas if a current exhaust temperature of the engine rises above a first threshold temperature, and
- reduce the amount of recirculated exhaust gas if a combustion stability parameter of the engine drops below a first stability threshold value.

Thereby, a control arrangement is provided capable of adapting the amount of the recirculated exhaust gas to the cylinder based on a current operational condition of the engine and on a current composition of fuel supplied to the engine. As a result thereof, a control arrangement is provided capable of increasing the possible power output of the engine while keeping the exhaust temperature below threshold limits in an adaptive manner based on a current operational condition of the engine and based on a current composition of fuel supplied to the engine.

A higher amount of recirculated exhaust gas to the cylinder reduces the exhaust temperature but increases the possibility of misfires in the engine. Accordingly, by increasing the amount of recirculated exhaust gas if the current exhaust temperature of the engine is above the first threshold temperature, the exhaust temperature will be reduced, or at least limited. Moreover, misfires will be avoided, or at least limited, by reducing the amount of recirculated exhaust gas if the combustion stability parameter of the engine drops below a first stability threshold value.

Accordingly, the control arrangement allows for an increase of recirculated exhaust gas to levels just below levels which impair the combustion process in the cylinder. In this manner, the amount of recirculated exhaust gas is controlled in an adaptive manner based on the properties of the current fuel being supplied to the engine to levels tolerated by the current fuel, which provides conditions for an increased power output of the engine while keeping the exhaust temperature below threshold limits, even at high ambient temperatures.

As a further result thereof, a control arrangement is provided reducing the need for limiting the output of the engine to avoid too high exhaust temperatures, even at high ambient temperatures.

As an example of the adaptive nature of the control performed by the control arrangement according to the fourth aspect of the invention, if the engine is configured to run on a gaseous fuel, and the current gaseous fuel is mainly composed of natural gas, the amount of recirculated exhaust gas can be increased to higher levels without impairing the combustion process in the cylinder than when using bio-gas. This because natural gas can withstand more recirculated exhaust gas than bio-gas before instabilities in the combustion process arises. Accordingly, when the current gaseous fuel is mainly composed of bio-gas, the combustion stability parameter of the engine is expected to drop below the first stability threshold value at a lower level of recirculated exhaust gas than when the current gaseous fuel is mainly composed of natural gas. In this manner, the control arrangement according to the fourth aspect of the invention may control the amount of recirculated exhaust gas in an adaptive manner based on the current composition of fuel supplied to the engine and on a current operational condition of the engine to levels just below levels which impair the combustion process in the cylinder. In this manner, the output of the engine can be increased without obtaining too high exhaust temperatures, given the current type of fuel supplied to the engine and given ambient conditions, such as the ambient temperature.

If the engine is a compression ignition engine comprising a Selective Catalytic Reduction (SCR) catalyst, the control performed by the control arrangement provides conditions for avoiding supply of exhaust having too high temperatures to the SCR-catalyst in an adaptive manner based on the current composition of fuel supplied to the engine and on a current operational condition of the engine. This because the control arrangement allows for an increase of recirculated exhaust gas to levels just below levels which impair the combustion process in the cylinder. Accordingly, the control arrangement allows for increased power output of the engine while keeping the exhaust temperature below threshold limits set by the SCR-catalyst.

Accordingly, a control arrangement is provided overcoming, or at least alleviating, at least some of the above-mentioned problems and drawbacks. As a result, the above-mentioned object is achieved

It will be appreciated that the various embodiments described for the method according to the first aspect of the invention described herein are all combinable with the control arrangement as described herein. That is, the control arrangement according to the fourth aspect of the invention may be configured to perform any one of the method steps of the method according to the first aspect of the invention described herein.

According to a fifth aspect of the invention, the object is achieved by an internal combustion engine comprising a control arrangement according to some embodiments of the present disclosure.

Thereby, an internal combustion engine is provided having conditions for operating at higher power output levels while keeping the exhaust temperature below threshold limits, even at high ambient temperatures.

Accordingly, an internal combustion engine is provided overcoming, or at least alleviating, at least some of the above-mentioned problems and drawbacks. As a result, the above-mentioned object is achieved.

According to a sixth aspect of the invention, the object is achieved by a vehicle comprising an internal combustion engine according to some embodiments of the present disclosure. Since the vehicle comprises an internal combustion engine according to some embodiments, a vehicle is provided having conditions for overcoming, or at least alleviating, at least some of the above-mentioned drawbacks.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates an internal combustion engine, according to some embodiments of the present disclosure,
Fig. 2a illustrates a graph showing a current exhaust temperature as a function of a current output of the engine illustrated in Fig. 1,
Fig. 2b illustrates a graph showing a combustion stability parameter and an amount of recirculated exhaust gas of the engine, illustrated in Fig. 1,
Fig. 3 illustrates a vehicle according to some embodiments of the present disclosure,
Fig. 4 illustrates a method of controlling an amount of recirculated exhaust gas to a cylinder of an internal combustion engine, and
Fig. 5 illustrates a computer-readable medium, according to some embodiments.

### DETAILED DESCRIPTION

Aspects of the present invention will now be described more fully. Like numbers refer to like elements throughout. Well-known functions or constructions will not necessarily be described in detail for brevity and/or clarity.

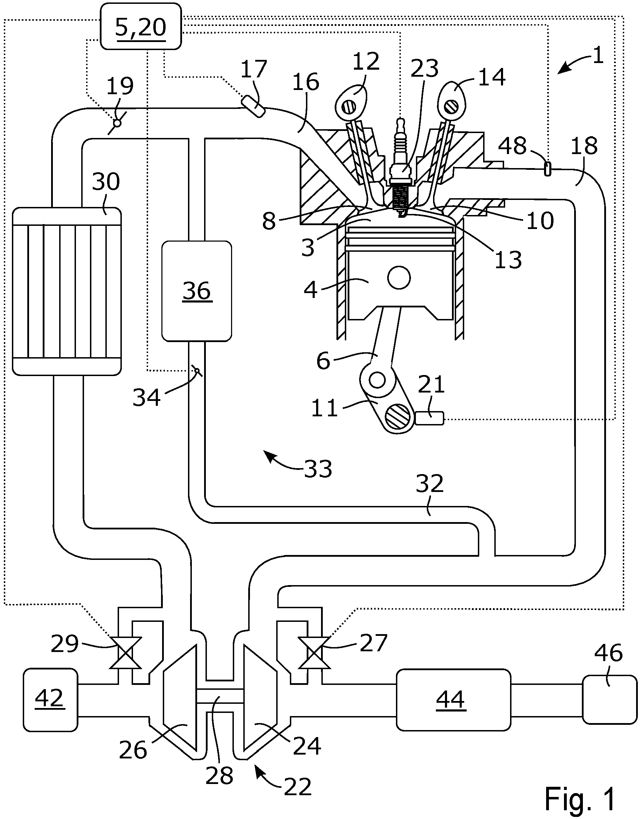

**Fig. 1** schematically illustrates an internal combustion engine 1, according to some embodiments of the present disclosure. The internal combustion engine 1 is in some places herein referred to as "the combustion engine 1", or simply "the engine 1". According to the illustrated embodiments, the engine 1 is a four-stroke internal combustion engine 1. The engine 1 comprising a cylinder 3, a piston 4, a connecting rod 6 and a crank shaft 11. The piston 4 is connected to the crank shaft 11 via the connecting rod 6. The piston 4 is configured to reciprocate in the cylinder 3 upon rotation of the crank shaft 11. The engine 1 further comprises an inlet valve 8, an exhaust valve 10, an inlet valve control arrangement 12, and an exhaust valve control arrangement 14.

The engine 1 further comprises an inlet manifold 16 and an exhaust manifold 18. The inlet valve 8 is configured to control flow of gas between the inlet manifold 16 and the cylinder 3. The exhaust valve 10 is configured to control flow of gas between the cylinder 3 and the exhaust manifold 18. The inlet valve control arrangement 12 is configured to control opening events of the inlet valve 8 and the exhaust valve control arrangement 14 is configured to control opening events of the exhaust valve 10. The inlet valve control arrangement 12 and the exhaust valve control arrangement 14 may each be connected to the crank shaft 11 of the engine 1, for example via a belt, a chain, or gears, so as to control opening events of the inlet valve 8 and the exhaust valve 10 respectively based on the rotational position of the crank shaft 11. According to further embodiments, the engine 1 may comprise an electric, pneumatic, or hydraulic inlet valve control arrangement 12, and/or an electric, pneumatic, or hydraulic the exhaust valve control arrangement 14, for example controlling opening events of the inlet valve 8 and the exhaust valve 10 respectively based on the rotational position of the crank shaft 11 obtained from a crank angle sensor 21 of the engine 1.

According to the illustrated embodiments, the engine 1 is an Otto engine 1 comprising an ignition device 13 configured to ignite an air fuel mixture in the cylinder 3. Moreover, according to the illustrated embodiments, the engine 1 is configured to run on a gaseous fuel, as is further explained herein. However, according to further embodiments of the present disclosure, the engine 1, as referred to herein, may be another type of engine, such as a compression ignition engine, or an Otto-engine configured to run on a liquid fuel, such as petrol, alcohol, similar volatile fuels, or combinations thereof.

The engine 1 comprises a fuel supply device 17. According to the illustrated embodiments, the fuel supply device 17 is configured to supply fuel to the inlet manifold 16 of the engine 1, i.e. upstream of the inlet valve 8. The fuel supply device 17 may comprise one or more injectors and/or fuel nozzles. According to further embodiments, the engine 1 may comprise a fuel supply device configured to supply fuel directly into the cylinder 3 of the engine 1, i.e. downstream of the inlet valve 8. According to the illustrated embodiments, the engine 1 comprises an air inlet throttle 19 controllable to regulate the amount of air supplied to the inlet manifold 16 of the engine 1. In Fig. 1, one cylinder 3 of the engine 1 is illustrated. However, the engine 1 may comprise another number of cylinders 3, such as for example four, six, or eight cylinders 3. Likewise, in Fig. 1, one inlet valve 8 and one outlet valve 10 is illustrated. However, each cylinder 3 of the engine 1 may comprise another number of inlet and outlet valves 8,10, such as two inlet valves 8 and two outlet valves 10.

According to the illustrated embodiments, the engine 1 comprises a charging device 22 configured to compress air to the inlet manifold 16 of the engine 1. According to the illustrated embodiments, the charging device 22 is a turbocharger comprising a turbine 24 configured to be driven by the exhaust expelled from the cylinder 3. The charging device 22 further comprises a compressor 26 connected to the turbine 24 via a shaft 28. According to further embodiments, the engine 1 may comprise another type of charging device, such as a mechanically driven charging device. The compressor 26 of the charging device 22 is configured to compress air to the inlet manifold 16 during rotation thereof. Moreover, according to the illustrated embodiments, the engine 1 comprises a charge air cooler 30 arranged downstream of the compressor 26 of the charging device 22. The charge air cooler 30 is configured to cool the air compressed by the charging device 22 before the air is conducted to the inlet manifold 16 of the engine 1. In this manner, the power and fuel efficiency of the engine 1 can be increased.

According to the illustrated embodiments, the charging device 22 comprises a waste gate valve 27 controllable to an open position in which the waste gate valve 27 conducts exhaust gasses past the turbine 24 in a manner bypassing the turbine 24. Moreover, according to the illustrated embodiments, the charging device 22 comprises a bypass valve 29 controllable to an open position in which the bypass valve 29 conducts air past the compressor 26 in a manner bypassing the compressor 26. The waste gate valve 27 and the bypass valve 29 can each be used to limit a boost pressure produced by the charging device 22, as is further explained herein.

Moreover, according to the illustrated embodiments, the engine 1 comprises an air filter 42 arranged upstream of the compressor 26, an exhaust aftertreatment system 44 downstream of the turbine 24 and an exhaust muffler 46 arranged downstream of the exhaust aftertreatment system 44. Furthermore, the engine 1 comprises a crank angle sensor 21 configured to monitor a rotational speed of a crank shaft 11 of the engine 1.

The engine 1 further comprises an exhaust gas recirculation EGR system 33. EGR is an abbreviation used for exhaust gas recirculation. The abbreviation "EGR" is used in some places herein for describing "exhaust gas recirculation". The EGR system 33 comprises an EGR conduit 32 fluidly connecting a portion of the exhaust manifold 18 and a portion of the inlet manifold 16. The EGR system 33 further comprises an EGR throttle 34 arranged in the EGR conduit 32. According to the illustrated embodiments, the EGR system 33 is a so called high pressure EGR system comprising an EGR conduit 32 fluidly connected to the exhaust system of the engine 1 at a location upstream of the turbine 24 of the charging device 22 and fluidly connected to the inlet manifold 16 at a location downstream of the compressor 26 of the charging device 22. According to further embodiments, the EGR system 33 may comprise another type of EGR conduit, such as an EGR conduit fluidly connected to the exhaust system of the engine 1 at a location downstream of the turbine 24 of the charging device 22 and fluidly connected to the inlet manifold 16 at a location upstream of the compressor 26 of the charging device 22. Such EGR systems are sometimes referred to as low pressure EGR systems. According to still further embodiments of the present disclosure, the engine 1 may comprise a so called internal EGR system configured to recirculate exhaust gas from the exhaust manifold 18 to the cylinder 3 by performing specific control of valve lifts of the exhaust valve 10. According to the illustrated embodiments, the EGR system 33 comprises an EGR cooler 36. The EGR cooler 36 is configured to cool the exhaust gas conducted through the EGR conduit 32.

According to embodiments herein, the engine 1 comprises a control arrangement 5 configured to control an amount of EGR supplied to the cylinder 3 the engine 1. According to the illustrated embodiments, the control arrangement 5 configured to control the amount of EGR supplied to the cylinder 3 by controlling the opening degree of the EGR throttle 34. The control arrangement 5 is configured to input a current exhaust temperature of the engine 1. According to the illustrated embodiments, the control arrangement 5 is configured to input the current exhaust temperature of the engine 1 using data from an exhaust temperature sensor 48 arranged at the exhaust manifold 18. According to further embodiments, the control arrangement 5 may be configured to input the current exhaust temperature of the engine 1 by estimating the current exhaust temperature using other type of input data, such as a current output of the engine 1, a current boost pressure of the charging device 22, a current ambient temperature, a current rotational speed of the crank shaft 11 of the engine 1, and the like.

Moreover, the control arrangement 5 is configured to input a combustion stability parameter of the engine 1. The combustion stability parameter is representative of the combustion stability in the cylinder 3 of the engine 1. The combustion stability parameter may comprise data indicating the presence of ongoing and/or upcoming instabilities in the combustion in the cylinder 3 of the engine 1, such as ongoing and/or upcoming full or partial misfires in the cylinder 3 of the engine 1. According to the illustrated embodiments, the control arrangement 5 is configured to obtain the combustion stability parameter using data from the crank angle sensor 21 and data from an ion current sensor 23 of the engine 1. In this manner, a reliable combustion stability parameter is obtained having conditions for indicating instabilities in the combustion in the cylinder with a high accuracy before full misfires arises in the cylinder 3. According to the illustrated embodiments, the ignition device 13 of the engine 1 is utilized as an ion current sensor 23 configured to monitor the presence of ion currents in the cylinder 3 so as to detect instabilities in the combustion in the cylinder 3. According to further embodiments, the control arrangement 5 may be configured to obtain the combustion stability parameter using other type of data.

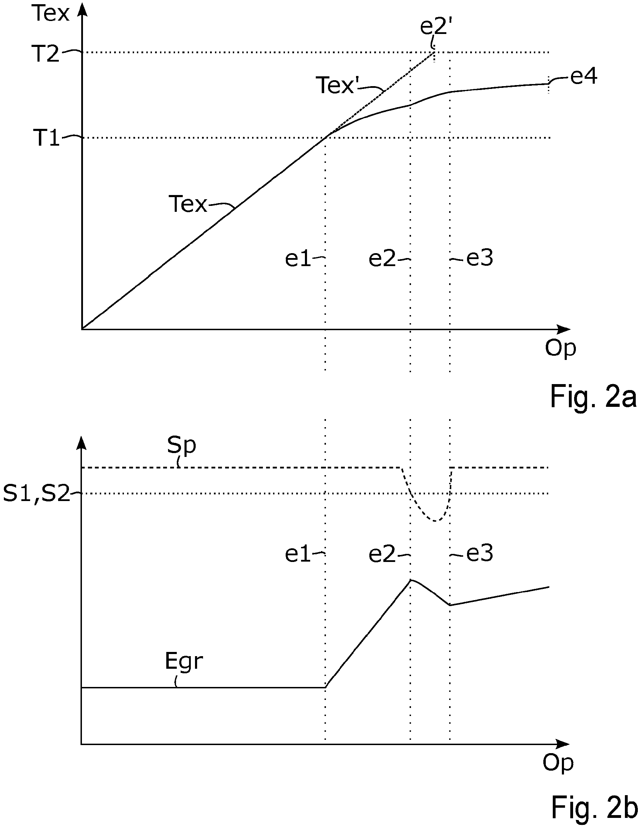

**Fig. 2a** illustrates a graph showing a current exhaust temperature Tex as a function of a current output Op of the engine 1 illustrated in Fig. 1. In Fig. 2a, the vertical axis indicates the current exhaust temperature Tex and the horizontal axis indicates the current output Op of the engine 1, illustrated in Fig. 1.

**Fig. 2b** illustrates a graph showing a combustion stability parameter Sp and an amount of recirculated exhaust gas Egr of the engine 1, illustrated in Fig. 1. In Fig. 2b, the vertical axis indicates the combustion stability parameter Sp and the amount of recirculated exhaust gas Egr of the engine 1, whereas the horizontal axis indicates the current output Op of the engine 1, illustrated in Fig. 1. As can be seen by a first, a second, and a third event line e1 - e3 drawn between the graphs illustrated in Fig. 2a and Fig. 2b, the graph illustrated in Fig. 2b is connected to the graph illustrated in Fig. 2a in the sense that the respective horizontal axis Op of these graphs comprises the same scale and values of the output Op of the engine 1. In Fig. 2a and Fig. 2b, the rotational speed of the engine 1 is constant. Therefore, the current output Op indicated in Fig. 2a and Fig. 2b is also indicative of a current torque produced by the engine 1. Moreover, sometimes the wording "load" is used for describing the output of an engine. Therefore, throughout this disclosure, the wording "output" may be replaced by the wording "load".

Below, simultaneous reference is made to Fig. 1, Fig. 2a, and Fig. 2b. According to embodiments herein, the control arrangement 5 is configured to increase of the amount of recirculated exhaust gas Egr if a current exhaust temperature Tex of the engine 1 rises above a first threshold temperature T1. In Fig. 2a, the first threshold temperature T1 is indicated as a dotted horizontal line T1. As can be seen in Fig. 2a, the current exhaust temperature Tex rises above the first threshold temperature T1 at the first event line e1. Moreover, as can be seen in Fig. 2b, the control arrangement 5 starts to increase of the amount of recirculated exhaust gas Egr at the first event line e1. As can be seen in Fig. 2a, the rate of increase of the current exhaust temperature Tex declines after the first event line e1 as a result of the increased amount of recirculated exhaust gas Egr supplied to the cylinder 3. According to the illustrated embodiments, the control unit 5 is configured to perform a gradual increase of the amount of recirculated exhaust gas Egr when the current exhaust temperature Tex is above the first threshold temperature T1. According to further embodiments, the control unit 5 may be configured to perform a stepwise increase of the amount of recirculated exhaust gas Egr when the current exhaust temperature Tex is above the first threshold temperature T1.

Moreover, according to embodiments herein, the control unit 5 is configured to reduce the amount of recirculated exhaust gas Egr if a combustion stability parameter Sp of the engine 1 drops below a first stability threshold value S1. As can be seen in Fig. 2b, the combustion stability parameter Sp of the engine 1 drops below the first stability threshold value S1 at the second event line e2. In Fig. 2b, the first stability threshold value S1 is indicated as a dotted horizontal line S1.

According to the illustrated embodiments, the control unit 5 is configured to continuously monitor the combustion stability parameter Sp and initiate a reduction in the amount of recirculated exhaust gas Egr when the combustion stability parameter Sp of the engine 1 drops below the first stability threshold value S1. As can be seen in Fig. 2b, the control arrangement 5 starts the reduction of the amount of recirculated exhaust gas Egr at the second event line e2 as a result of the combustion stability parameter Sp dropping below the first stability threshold value S1. Moreover, as seen in Fig. 2a, the rate of increase of the current exhaust temperature Tex increases after the second event line e1 as a result of the reduced amount of recirculated exhaust gas Egr. As is further explained herein, a great amount of recirculated exhaust gas Egr reduces the current exhaust temperature Tex but can lead to instability of the combustion in the cylinder 3 and misfires in the cylinder 3 of the engine 1.

Thus, by reducing the amount of recirculated exhaust gas Egr when the combustion stability parameter Sp of the engine 1 drops below the first stability threshold value S1, a more stable combustion can be provided reducing the probability of instabilities and misfires in the cylinder. Moreover, the amount of recirculated exhaust gas Egr is controlled in an adaptive manner based on current combustion properties of the fuel supplied to the engine 1 and on a current operational condition of the engine 1 to levels just below levels which impair the combustion process in the cylinder 3. In this manner, the output Op of the engine 1 can be increased without obtaining too high exhaust temperatures Tex, given the current type of fuel supplied to the engine 1, given a current operational state of the engine 1, and given ambient conditions, such as the ambient temperature.

As can be seen in Fig. 2b, the combustion stability parameter Sp of the engine 1 rises above the first stability threshold value S1 at the third event line e3. According to the illustrated embodiments, the control unit 5 is configured to increase the amount of recirculated exhaust gas Egr if the combustion stability parameter Sp of the engine 1 rises above the first stability threshold value S1, as can be seen in Fig. 2b after the third event line e3. As can be seen in Fig. 2a, the rate of increase of the current exhaust temperature Tex declines after the third event line e3 as a result of the increased amount of recirculated exhaust gas Egr. The control arrangement 5 may be configured to monitor if the combustion stability parameter Sp drops below the first stability threshold value S1 as a result of the increased amount of recirculated exhaust gas Egr, and may reduce the amount of recirculated exhaust gas Egr if the combustion stability parameter Sp drops below the first stability threshold value S1.

According to the illustrated embodiments, the control unit 5 is configured to perform a gradual decrease of the amount of recirculated exhaust gas Egr when the combustion stability parameter Sp of the engine 1 is below the first stability threshold value S1, as can be seen between the second and third event lines e2, e3 in Fig. 2b. According to further embodiments, the control unit 5 may be configured to perform a stepwise decrease of the amount of recirculated exhaust gas Egr when the combustion stability parameter Sp of the engine 1 is below the first stability threshold value S1.

According to embodiments herein, the control arrangement 5 may be configured to increase the amount of recirculated exhaust gas Egr in a gradual or stepwise manner until the combustion stability parameter Sp of the engine 1 drops below a second stability threshold value S2, and wherein the second stability threshold value S2 may be higher than, or equal to, the first stability threshold value S1. In Fig. 2a, the second stability threshold value S2 is illustrated as equal to the first stability threshold value S1. However, as indicated above, the second stability threshold value S2 may be higher than the first stability threshold value S1.

According to some embodiments, the control arrangement 5 is configured to reduce the amount of recirculated exhaust gas Egr if the current exhaust temperature Tex of the engine 1 drops below the first threshold temperature T1. As a result, the amount of recirculated exhaust gas Egr is reduced if the current exhaust temperature Tex of the engine 1 indicates that no higher amount of recirculated exhaust gas Egr is needed for supressing the exhaust temperature Tex.

According to the illustrated embodiments, the engine 1 comprises a system 20 configured to limit the output Op of the engine 1 if the current exhaust temperature Tex rises above a second threshold temperature T2, wherein the second threshold temperature T2 is equal to, or higher than, the first threshold temperature T1. According to the illustrated embodiments, the second threshold temperature T2 is higher than the first threshold temperature T1, but may, as indicated above, be equal to the first threshold temperature T1.

As is indicated in Fig. 1, according to the illustrated embodiments, the system 20 is integrated into the control unit 5. According to the illustrated embodiments, the system 20 is configured to limit the output Op of the engine 1 by increasing an opening degree of the waste gate 27. As an alternative, or in addition, the system 20 may be configured to limit the output Op of the engine 1 by performing other measures, such as by reducing an opening degree of the air inlet throttle 19 of the engine 1.

A dashed line Tex' is illustrated in Fig. 2a indicating the exhaust temperature Tex' of an engine lacking the control of the amount of recirculated exhaust gas Egr according to the embodiments herein. As can be seen in Fig. 2a, the exhaust temperature Tex' reaches the second threshold temperature T2 at an early stage at the event e2' indicated in Fig. 2a causing a limitation of the output Op of the engine 1 at the event e2' indicated in Fig. 2a. As can be seen at the event e4 indicated in Fig. 2a, a significant higher output Op can be reached by the control of the amount of recirculated exhaust gas Egr according to the embodiments herein. In addition, the significant higher output Op can be reached without exceeding the second threshold temperature T2. The control of the amount of recirculated exhaust gas Egr according to the embodiments herein can thus be utilized for obtaining higher output Op without exceeding the exhaust threshold temperatures in Otto-engines as well as in compression ignition engines. In this manner, damage to components in both these types of engines can be avoided, such as exhaust manifolds, turbines of turbochargers, housings of turbochargers, different exhaust after treatment components, such as catalysts, Selective Catalytic Reduction catalysts, and the like, while obtaining higher output levels.

Moreover, due to the control of the amount of recirculated exhaust gas Egr according to the embodiments herein, an adaptation is made of the amount of recirculated exhaust gas Egr based on a current operational state of the engine 1 and of current fuel properties of fuel supplied to the engine 1. That is, if a fuel is supplied to the engine 1 having less favourable fuel properties regarding combustion stability, the combustion stability parameter Sp of the engine 1 will drop below the first stability threshold value S1 earlier, i.e. at lower output Op levels, than if a fuel is supplied to the engine 1 having more favourable fuel properties regarding combustion stability. Thereby, the amount of recirculated exhaust gas Egr will be reduced earlier, i.e. at lower output Op levels, in case a fuel is supplied to the engine 1 having less favourable fuel properties regarding combustion stability than when a fuel is supplied to the engine 1 having more favourable fuel properties regarding combustion stability. In this manner, the amount of recirculated exhaust gas Egr is controlled in an adaptive manner based on the properties of the current fuel being supplied to the engine 1 to levels tolerated by the current fuel being supplied to the engine 1.

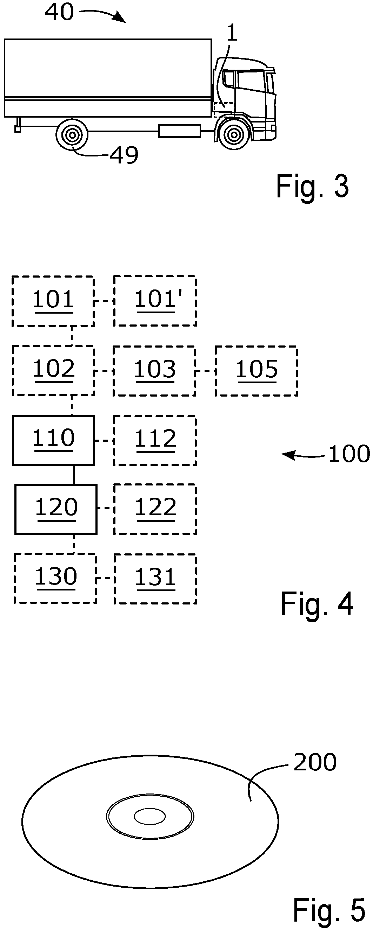

**Fig. 3** illustrates a vehicle 40 according to some embodiments of the present disclosure. The vehicle 40 comprises an internal combustion engine 1 according to the embodiments illustrated in Fig. 1. The engine 1 is configured to provide motive power to the vehicle 40 via wheels 49 of the vehicle 40. According to the illustrated embodiments, the vehicle 40 is a truck. However, according to further embodiments, the vehicle 40, as referred to herein, may be another type of manned or unmanned vehicle for land or water based propulsion such as a lorry, a bus, a construction vehicle, a tractor, a car, a ship, a boat, or the like.

**Fig. 4** illustrates a method 100 of controlling an amount of recirculated exhaust gas to a cylinder of an internal combustion engine. The engine 1 may be an internal combustion engine 1 according to the embodiments explained with reference to Fig. 1, Fig. 2a, and Fig. 2b. Therefore, below, simultaneous reference is made to Fig. 1, Fig. 2a, Fig. 2b, and Fig. 4.

The method 100 is a method 1 of controlling an amount of recirculated exhaust gas Egr to a cylinder 3 of an internal combustion engine 1, wherein the method 100 comprises the steps of:
- increasing 110 the amount of recirculated exhaust gas Egr if a current exhaust temperature Tex of the engine 1 is above a first threshold temperature T1, and
- reducing 120 the amount of recirculated exhaust gas Egr if a combustion stability parameter Sp of the engine 1 drops below a first stability threshold value S1.

As indicated in Fig. 4, the method 100 may comprise the step of:
- inputting 101 the current exhaust temperature Tex of the engine 1.

As indicated in Fig. 4, the step of inputting 101 the current exhaust temperature Tex of the engine 1 may comprise the step of:
- inputting 101' the current exhaust temperature Tex of the engine 1 using data from an exhaust temperature sensor 48.

As indicated in Fig. 4, the method 100 may comprise the step of:
- inputting 102 the combustion stability parameter Sp.

As indicated in Fig. 4, the step of inputting 102 the combustion stability parameter Sp may comprise the step of:
- inputting 103 the combustion stability parameter Sp by monitoring a rotational speed of a crank shaft 11 of the engine 1.

Accordingly, the combustion stability parameter Sp may comprise a rotational speed of a crank shaft 11 of the engine 1.

Moreover, as indicated in Fig. 4, the step of inputting 102 the combustion stability parameter Sp may comprise the step of:
- inputting 105 the combustion stability parameter Sp by monitoring the presence of ion currents in the cylinder 3.

Accordingly, the combustion stability parameter Sp may comprise a parameter representing a presence of ion currents in the cylinder 3.

As indicated in Fig. 4, the step of increasing 110 the amount of recirculated exhaust gas Egr may comprise the step of:
- increasing 112 the amount of recirculated exhaust gas Egr in a gradual or stepwise manner until the combustion stability parameter Sp of the engine 1 drops below a second stability threshold value S2, wherein the second stability threshold value S2 is higher than, or equal to, the first stability threshold value S1.

Moreover, as indicated in Fig. 4, the method 100 further may comprise the step of:
- reducing 122 the amount of recirculated exhaust gas Egr if the current exhaust temperature Tex of the engine 1 drops below the first threshold temperature T1.

Furthermore, as indicated in Fig. 4, the method 100 further may comprise the step of:
- limiting 130 the output of the engine 1 if the current exhaust temperature Tex rises above a second threshold temperature T2, wherein the second threshold temperature T2 is equal to, or higher than, the first threshold temperature T1.

As indicated in Fig. 4, the step of limiting 130 the output of the engine 1 may comprise the step of:
- limiting 131 the output of the engine 1 by increasing an opening degree of a waste gate valve 27 of the engine 1.

It will be appreciated that the various embodiments described for the method 100 are all combinable with the control arrangement 5 as described herein. That is, the control arrangement 5 may be configured to perform any one of the method steps 101, 101', 102, 103, 105, 110, 112, 120, 122, 130, and 131 of the method 100.

**Fig. 5** illustrates a computer-readable medium 200 comprising instructions which, when executed by a computer, cause the computer to carry out the method 100 according to some embodiments of the present disclosure.

According to some embodiments, the computer-readable medium 200 comprises a computer program comprising instructions which, when the program is executed by a computer, cause the computer to carry out the method 100 according to some embodiments.

One skilled in the art will appreciate that the method 1 of controlling an amount of recirculated exhaust gas Egr to a cylinder 3 of an internal combustion engine 1 may be implemented by programmed instructions. These programmed instructions are typically constituted by a computer program, which, when it is executed in the control arrangement 5, ensures that the control arrangement 5 carries out the desired control, such as the method steps 110, 111, 112, 113, 120, 121, 130, 131, 132, 133, 134, 135, 136, 137, 140 described herein. The computer program is usually part of a computer program product 200 which comprises a suitable digital storage medium on which the computer program is stored.

The control arrangement 5 may comprise a calculation unit which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression "calculation unit" may represent a processing circuitry comprising a plurality of processing circuits, such as, e.g., any, some or all of the ones mentioned above.

The control arrangement 5 may further comprise a memory unit, wherein the calculation unit may be connected to the memory unit, which may provide the calculation unit with, for example, stored program code and/or stored data which the calculation unit may need to enable it to do calculations. The calculation unit may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The control arrangement 5 is connected to components 17, 19, 21, 23, 27, 29, 34, 48 of the combustion engine 1 for receiving and/or sending input and output signals. These input and output signals may comprise waveforms, pulses, or other attributes which the input signal receiving devices can detect as information and which can be converted to signals processable by the control arrangement 5. These signals may then be supplied to the calculation unit. One or more output signal sending devices may be arranged to convert calculation results from the calculation unit to output signals for conveying to other parts of the vehicle's control system and/or the component or components for which the signals are intended. Each of the connections to the respective components 17, 19, 21, 23, 27, 29, 34, 48 of the combustion engine 1 for receiving and sending input and output signals may take the form of one or more from among a cable, a data bus, e.g. a CAN (controller area network) bus, a MOST (media orientated systems transport) bus or some other bus configuration, or a wireless connection.

In the embodiments illustrated, the combustion engine 1 comprises a control arrangement 5 but might alternatively be implemented wholly or partly in two or more control arrangements or two or more control units.

Control systems in modern vehicles generally comprise a communication bus system consisting of one or more communication buses for connecting a number of electronic control units (ECUs), or controllers, to various components on board the vehicle. Such a control system may comprise a large number of control units and taking care of a specific function may be shared between two or more of them. Vehicles and engines of the type here concerned are therefore often provided with significantly more control arrangements than depicted in Fig. 1, as one skilled in the art will surely appreciate.

The computer program product 200 may be provided for instance in the form of a data carrier carrying computer program code for performing at least some of the method steps 101, 101', 102, 103, 105, 110, 112, 120, 122, 130, and 131 according to some embodiments when being loaded into one or more calculation units of the control arrangement 5. The data carrier may be, e.g. a CD ROM disc, as is illustrated in Fig. 5, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner. The computer program product may furthermore be provided as computer program code on a server and may be downloaded to the control arrangement 5 remotely, e.g., over an Internet or an intranet connection, or via other wired or wireless communication systems.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A method (100) of controlling an amount of recirculated exhaust gas (Egr) to a cylinder (3) of an internal combustion engine (1), wherein the method (100) comprises the steps of:
- increasing (110) the amount of recirculated exhaust gas (Egr) if a current exhaust temperature (Tex) of the engine (1) is above a first threshold temperature (T1), and
- reducing (120) the amount of recirculated exhaust gas (Egr) if a combustion stability parameter (Sp) of the engine (1) drops below a first stability threshold value (S1).

2. The method (100) according to claim 1, wherein the step of increasing (110) the amount of recirculated exhaust gas (Egr) comprises the step of:
- increasing (112) the amount of recirculated exhaust gas (Egr) in a gradual or stepwise manner until the combustion stability parameter (Sp) of the engine (1) drops below a second stability threshold value (S2), wherein the second stability threshold value (S2) is higher than, or equal to, the first stability threshold value (S1).

3. The method (100) according to claim 1 or 2, wherein the method (100) further comprises:
- reducing (122) the amount of recirculated exhaust gas (Egr) if the current exhaust temperature (Tex) of the engine (1) drops below the first threshold temperature (T1).

4. The method (100) according to any one of the preceding claims, wherein the method (100) further comprises:
- limiting (130) the output of the engine (1) if the current exhaust temperature (Tex) rises above a second threshold temperature (T2), wherein the second threshold temperature (T2) is equal to, or higher than, the first threshold temperature (T1).

5. The method (100) according to any one of the preceding claims, wherein the combustion stability parameter (Sp) comprises a rotational speed of a crank shaft (11) of the engine (1).

6. The method (100) according to any one of the preceding claims, wherein the combustion stability parameter (Sp) comprises a parameter representing a presence of ion currents in the cylinder (3).

7. The method (100) according to any one of the preceding claims, wherein the internal combustion engine (1) is an Otto engine (1) comprising an ignition device (13) configured to ignite an air fuel mixture in the cylinder (3).

8. The method (100) according to any one of the preceding claims, wherein the internal combustion engine (1) is configured to run on a gaseous fuel.

9. A computer program comprising instructions which, when the program is executed by a computer, cause the computer to carry out the method (100) according to any one of the preceding claims.

10. A computer-readable medium (200) comprising instructions which, when executed by a computer, cause the computer to carry out the method (100) according to any one of the claims 1 - 8.

11. A control arrangement (5) configured to control an amount of recirculated exhaust gas (Egr) to a cylinder (3) of an internal combustion engine (1), wherein the control arrangement (5) is configured to:
- increase of the amount of recirculated exhaust gas (Egr) if a current exhaust temperature (Tex) of the engine (1) rises above a first threshold temperature (T1), and
- reduce the amount of recirculated exhaust gas (Egr) if a combustion stability parameter (Sp) of the engine (1) drops below a first stability threshold value (S1).

12. An internal combustion engine (1) comprising a control arrangement (5) according to claim 11.

13. A vehicle (40) comprising an internal combustion engine (1) according to claim 12.
